# EUROPÄISCHE PATENTANMELDUNG

(11) **EP 1 127 847 A1**
(43) Veröffentlichungstag der Anmeldung: **29.08.2001**
(21) Anmeldenummer: 00104009.6
(22) Anmeldetag: 25.02.2000
(51) Int. Cl.: C02F 3/12, C02F 3/06

(54) **Verfahren und Vorrichtung zum mikrobiologischen Abbau von Schadstoffen in Fluiden**

(71) Anmelder: GfM Gesellschaft für Modulfermenterbau mbH, 58455 Witten (DE)
(72) Erfinder: Wolff, Elmar Dr., 58455 Witten (DE); Herr Rosenthal, 58455 Witten (DE)
(74) Vertreter: Meyers, Hans-Wilhelm, Dr.Dipl.-Chem.

(57) **Zusammenfassung**

Verfahren zum mikrobiologischen Abbau von Schadstoffen in schadstoffbelastetem Fluidum, wobei zum mikrobiologischen Abbau ein immobilisiertes Ensemble von Mikroorganismen (Biozönose) eingesetzt wird, das in einer Vorrichtung zum mikrobiologischen Abbau von Schadstoffen in Fluiden wechselweise submersen und nicht submersen Bedingungen ausgesetzt wird sowie Vorrichtung zum mikrobiologischen Abbau von Schadstoffen in Fluiden mit mindestens zwei Aufnahmeräumen (1,2) für das Fluid, wobei sich in mindestens einem Aufnahmeraum (1,2) immobilisierte Mikroorganismen befinden. Die Vorrichtung ist dadurch gekennzeichnet, dass die mindestens zwei Aufnahmeräume (1,2) durch eine Vebindungsleitung (3) untereinander in Fluidverbindung bringbar sind und dass Einrichtungen (4) vorgesehen sind, mittels derer das Fluid wechselweise von dem einen Aufnahmeraum (1) in den anderen Aufnahmeraum überführbar ist, wobei die Mikroorganismen in dem mindestens einen Aufnahmeraum (1,2) alternierend submersen und nicht submersen Bedingungen aussetzbar sind.

## Beschreibung

Gegenstand der vorliegenden Erfindung ist ein Verfahren und Vorrichtung zum mikrobiologischen Abbau von Schadstoffen in Fluiden.

Der Abbau von Schadstoffen in Fluiden Systemen ist oft ein technisch anspruchsvolles Problem. Es haben sich insbesondere in neuerer Zeit Methoden etabliert, bei denen Mikroorganismen dazu verwendet werden, Schadstoffe abzubauen. Etabliert sind zum Beispiel biologische Kläranlagen. Dabei handelt es sich aber zum einen um Großanlagen, beispielsweise komunale Einrichtungen oder aber relativ kleine Einheiten, die in Form von häuslichen Anlagen eingesetzt werden. Allerdings ist es technisch überaus aufwendig problemhaltige Fluide in mikrobiologischen Anlagen zu behandeln, da bereits geringe Schwankungen in der Zusammensetzungen der Fluide zu schwer übersehbaren Konsequenzen für die betroffene Anlage führen.

Beispielsweise fällt in Gaststätten oft Abwasser an, dass ganz erheblich in seiner Zusammensetzung schwankt. Fetthaltige Abwässer werden z.B. gefolgt von alkalischen Abwässern, wenn ein Spülmaschinengang läuft. So ist es für Mikroorganismen, die als Spezialisten bestimmte Aufgaben bewältigen können schwer, unter wechselnden Bedingungen ihre Aufgaben zuverlässig zu erfüllen.

Stand der Technik bei der Behandlung fetthaltiger Abwässer ist der Einsatz von sog. Fettabscheidern. Hier wird der physikalische Effekt der Schwerkrafttrennung zur Abscheidung aufschwimmender Fette genutzt. Diese Fettabscheider sind nicht in der Lage, anderweitig gelöste Fette abzutrennen. Das Fett bleibt beim Erzeuger und muß getrennt entsorgt werden. Oft tritt eine Geruchsbelästigung bei Lagerung im Fettabscheider auf. Durchtretendes Fett kann zu Komplikationen im Abwassersysgtem führen. Auflagen der Wasserbehörden verlangen darüberhinaus eine geringere Fettlast im Abwasser.

Das der Erfindung zu Grunde liegende technische Problem besteht darin, ein Verfahren bereitzustellen und eine Vorrichtung zu schaffen, mit denen es gelingt, Mikroorganismen in möglichst universeller Weise zum Abbau von Schadstoffen in Fluiden einzusetzen. Dabei sollen die im Stand der Technik auftretenden Nachteile vermieden werden.

Gelöst wird das der Erfindung zu Grunde liegende technische Problem durch ein Verfahren gemäß Anspruch 1, sowie eine Vorrichtung gemäß Anspruch 8.

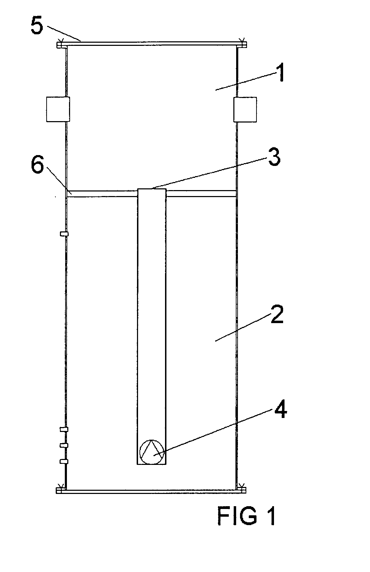

Fig. 1 zeigt eine Vorrichtung zur Durchführung des erfindungsgemäßen Verfahrens.

Das erfindungsgemäße Verfahren zum mikrobiologischen Abbau von Schadstoffen in schadstoffbelastetem Fluidum setzt zum mikrobiologischen Abbau ein immobilisiertes Ensemble von Mikroorganismen (Biozönose) ein, wobei die Biozönose wechselweise submersen und nicht submersen Bedingungen ausgesetzt wird. Das Verfahren wird in einer Vorrichtung durchgeführt, die mindestens zwei- Aufnahmeräume aufweist. Erfindungsgemäß kann das Fluidum ein Abwasser-, Gasstrom oder das Resultat eines durch eine Lösung geleiteten Gasstroms sein.

Erfindungsgemäß können zusätzlich Änderungen der Temperatur, des Sauerstoffgehaltes, des pH-Wertes, der Osmose, der Belastung durch Variation des Volumens und Fracht des Fluids oder Kombinationen davon erfolgen.

Vorzugsweise werden vorkonditionierte Mikroorganismen eingesetzt.

Das erfindungsgemäße Verfahren gewährleistet in vorteilhafter Weise durch den Wechsel zwischen submersen und nicht submersen Bedingungen abwechselnd die Einstellung von im wesentlichen anaeroben oder aeroben Bedingungen.

Die Zeitintervalle, für die die Mikroorganismen submersen Bedingungen ausgesetzt sind, und die Zeitintervalle, für die die Mikroorganismen nicht submersen Bedingungen ausgesetzt sind, können unterschiedlich lang sein. Die Zeitintervalle, für die die Mikroorganismen submersen Bedingungen ausgesetzt sind, und die Zeitintervalle, für die die Mikroorganismen nicht submersen Bedingungen ausgesetzt sind, können jeweils untereinander gleich lang oder unterschiedlich lang oder in Abhängigkeit von ihrer Anzahl zeitlich variabel sein.

Die erfindungsgemäße Vorrichtung, wie sie in Fig 1 beispielhaft gezeigt ist, ist eine Vorrichtung zum mikrobiologischen Abbau von Schadstoffen in Fluiden mit
- mindestens zwei Aufnahmeräumen für das Fluid, wobei sich in mindestens einem Aufnahmeraum immobilisierte Mikroorganismen befinden,
**dadurch gekennzeichnet ,**
- dass die mindestens zwei Aufnahmeräume durch eine Verbindungsleitung untereinander in Fluidverbindung bringbar sind und dass Einrichtungen vorgesehen sind, mittels derer das Fluid wechselweise von dem einen Aufnahmeraum in den anderen Aufnahmeraum überführbar ist, wobei die Mikroorganismen in dem mindestens einen Aufnahmeraum alternierend submersen und nicht submersen Bedingungen aussetzbar sind.

Vorzugsweise sind die Aufnahmeräume innerhalb eines Behälters angeordnet und durch mindestens eine Trennwand voneinander getrennt sind.

In einer bevorzugten Ausführungsform weist die Einrichtung erfindungsgemäß eine Druck- und/oder Saugpumpe zum Umpumpen des Fluids zwischen den Aufnahmeräumen auf.

Erfindungsgemäß verändert die Pumpe den in einem der Aufnahmeräume herrschenden hydrostatischen Druck zum Umpumpen des Fluids gegen die Schwerkraft in den über diesem Aufnahmeraum angeordneten anderen Aufnahmeraum und aus diesem heraus zurück in den einen Aufnahmeraum.

In einer besonderen Ausführungsform der erfindungsgemäßen Vorrichtung sind mehrere Gruppen von mindestens zwei Aufnahmeräumen fluidmäßig parallel und/oder seriell geschaltet. Dabei ist vorzugsweise zwischen den Gruppen von mindestens zwei Aufnahmeräumen eine Einrichtung zum Überführen des Fluids aus mindestens einem der Aufnahmeräume der einen Gruppe in mindestens einen der Aufnahmeräume der benachbarten Gruppe vorgesehen.

Der Modulfermenter ist für den biologischen Abbau von lipophilen Stoffen aus Abwässern, insbesondere Haushaltsabwässern wie Küchenabwässeren besonders geeignet. Grundsätzlich können aber auch andere Abwässer, die biologisch abbaubare Stoffe enthalten aufgearbeitet werden. Die Erfindung wird exemplarisch anhand der Behandlung von fetthaltigen Großküchenabwässern erläutert.

Bisherige Versuche mit biologisch arbeitenden Abwasserbehandlungsanlagen sind an derAnfälligkeit der Mikroorganismen auf stark schwankende Einleitbedingungen gescheitert.

Auf dieser Grundlage wurde ein System entwickelt, dass diesen Bedingungen Rechnung trägt.

Der Modulfermenter besteht im Wesentlichen aus einer Integratorstufe und einer Fermenterstufe.

### Integratorstufe:

Über geeignete physikalische Vorbehandlung werden dem anfallenden Küchenabwasser grobe Bestandteile >1,5 mm entzogen. Das so vorbehandelte Abwasser wird diskontinuierlich je nach Anfall, der Integrationsstufe zugeführt. Ein oder mehrere, in der Regel zylindrische Behälter bilden die Integrationsstufe. Wenn mehrere Behälter eingesetzt werden, sind die Verbindungen vorwiegend so-gewählt, dass ein System aus kommunizierenden Röhren entsteht.

Küchenabwasser schwankt stark im Bezug auf Volumenstrom, Temperatur, pH-Wert, Schmutzfracht und Tensid-Gehalt. in bestimmten Zeiträumen fallt der Zulauf an Abwasser gänzlich aus (Wochenende, Ferien).

In der Integratorstufe wird der diskontinuierliche Abwasserstrom gesammelt. Durch die gesteuerte Vermischung mehrerer Abwasserschübe über den Tag tritt ein Verdünnungs- bzw. Puffereffekt auf, der zu einer Abflachung der Belastungsspitzen der genannten Parameter führt. Die Füllhöhe der Integratoren wird mit Hilfe einer adaptiven Steuerung so beeinflusst, dass ein möglichst kontinuierlicher Abwasserstrom mit geringen Schwankungen der Störparameter an die Fermenterstufe abgegeben wird.

Die Integratorstufe ist in der Weise ausgeführt, dass sie, in Verbindung mit der nachgeschalteten Fermenterstufe, einen statischen Fettabscheider nachbildet, für den Fall, dass der Transport des Abwassers durch die Fermenterstufe gestört sein sollte (Notbetrieb). In den Behältern der Integratorstufe kann, inkubiert durch natürlich vorkommende Organismen oder durch absichtlich herbeigeführte Inkubation von aussen mit vorselektierten Mikroorganismen b.z.w. Biozönosen, "Anaerobbiologie" und/oder Aerobbiologie stattfinden.

### Fermenterstufe

Mehrere sogenannte Fermenterstrassen bilden die Fermenterstufe. Fermenterstrassen werden aus in der Regel zwei Fermentern in Reihe oder je einem parallel verbundenen Fermenterpaar in der Form zusammengestellt, dass der jeweils erste Fermenter (das erste Fermenterpaar) mit einer Biozönose A inkubiert wird, die z.B. auf den Abbau von lipophilen Stoffen hin optimiert ist, während der zweite Fermenter (das zweite Fermenterpaar) mit einer Biozönose B inkubiert wird, die z.B. auf den Abbau von CSB hin optimiert ist.

### Fermenter

Ein Fermenter besteht typischerweise aus zwei getrennten Reaktionsräumen. Ein äusserer Mantel umschliesst beispielsweise einen zylindrischen Raum, der seinerseits vorzugsweise mittels einer Trennplatte in einen oberen und einen unteren Reaktionsraum geteilt wird. Die Reaktionsräume sind durch ein Steigrohr miteinander verbunden, welches an der Trennplatte angebracht, eine Verbindung zwischen dem oberen Reaktionsraum und dem unteren Reaktionsraum herstellt. Das Steigrohr ragt bis wenige cm über dem Boden in den unteren Reaktionsraum hinein. Der Fermenterbehälter weist mehrere Aufnahmestutzen für Messsensorik auf. Weiter befinden sich im oberen Reaktionsraum je ein Zu- und ein Ablaufstutzen. Die effektive Ablaufhöhe des Auslaufstutzens kann durch Aufstecken von Rohrstücken variiert werden. Dadurch lässt sich ein System aus aufeinanderfolgenden Fermentern zusammenstellen, wobei bei dem jeweils folgenden Fermenter die effektive Ablaufhöhe des Ablaufstutzens geringer ist, als bei dem Vorhergehenden.

Im unteren Reaktionsraum befinden sich Anschlüsse für Messsensorik sowie Anschlusstücke für Druckluft und zur Entlastung des unteren Reaktionsraumes.

Durch geeignetes Beaufschlagen des unteren Reaktionsraumes mit Druckluft wird ein sich dort befindendes, flüssiges Medium durch das Steigrohr in den oberen Reaktionsraum gefördert. Durch Entspannen des Drucks in dem unteren Reaktionsraum strömt das Medium in denselben zurück.

Eine adaptive Steuerung beeinflusst die Beaufschlagung mit Druckluft in der Weise, dass ein Pendelbetrieb möglich ist, der durch gelegentliches Anheben des Flüssigkeitsspiegels über ein gewisses Niveau den Austrag von Flüssigkeit in den jeweils nachgeschalteten Fermenter, b.z.w. das nachgeschaltete Fermenterpaar oder, im Falle des letzten Fermenters, in die Kanalisation, einleitet.

### Biofilm

Die Reaktionsräume werden zur Vergrößerung der wirksamen Fläche vorzugsweise mit einem Träger, insbesondere einem Bionet, versehen. Dieses Bionet besteht zum Beispiel aus einem Kunststoffgeflecht als Trägermaterial, sowie insbesondere einer Beschichtung, die eine Besiedlung mit Mikroorgansimen erleichtert, wie einer AgarBeschichtung, welche durch gezielte Zugabe bestimmter Stoffe derart konditioniert sein kann, dass sie der gewünschten Biozönose eine ökologische Nische bereitstellt, die ihr einen Wachstumsvorteil gegenüber sich von Natur aus im Abwasser befindlichen Mikroorganismen verschafft. Die vorselektierten Mikroorganismen werden insbesondere in einem mehrtägigen Prozess an das Trägermaterial immobilisiert.

Überraschenderweise stellt sich eine Anreicherung von Fett b.z.w. Fettabbauzwischenprodukten im Bereich des Biofilms ein. Diese Anreicherung führt zu einer Verbesserung der Resistenz der Biozönose gegen Mangelzeiten, während derer die gebildeten Depots abgebaut werden.

Durch Anheben und Absenken des Flüssigkeitspegels im Fermenter herrschen, ähnlich Ebbe und Flut an der Gezeitengrenze der Meeresküsten, wechselweise aerobe wie anaerohe Zustände in den Reaktionsräumen. Diese ständig wechselnden Bedingungen, führen zu einem Stress der Mikroorganismen. Es zeigt sich, dass dieser Stress die Mikroorganismen dazu veranlasst, verfügbare Nahrungsquellen in erster Linie zu veratmen und nicht in Form von Biomasse anzureichern, was letzten Endes zu Schlammbildung im Fermenter und Austrag von Mikroorganismen in die Kanalisation führen würde.

### Steuerung

Die oben beschriebene Betriebsweise bedingt die ständige Überwachung relevanter Parameter sowie die Einbeziehung statischer Daten wie Ferienzeiten Wochenenden etc. So wird vor Wochenenden der Grad der Befüllung in den Integratoren und/oder Fermentern besonders hoch gewählt, um eine gewisse Bevorratung zu gewährleisten. Ändern sich diese Daten, so kann im laufenden Betrieb das Steuerprogramm des Modulfermenters aktualisiert oder geändert werden.

## Patentansprüche

1. Verfahren zum mikrobiologischen Abbau von Schadstoffen in schadstoffbelastetem Fluidum, wobei zum mikrobiologischen Abbau ein immobilisiertes Ensemble von Mikroorganismen (Biozönose) eingesetzt wird, das in einer Vorrichtung zum mikrobiologischen Abbau von Schadstoffen in Fluiden mit mindestens zwei Aufnahmeräumen wechselweise submersen und nicht submersen Bedingungen ausgesetzt wird.

2. Verfahren nach Anspruch 1, wobei das Fluidum ein Abwasser-, Gasstrom oder das Resultat eines durch eine Lösung geleiteten Gasstroms ist.

3. Verfahren nach einem der Ansprüche 1 oder 2, wobei zusätzlich eine Änderung der Temperatur, des Sauerstoffgehaltes, des pH-Wertes, der Osmose, der Belastung durch Variation des Volumens und Fracht des Fluids oder Kombinationen davon erfolgt.

4. Verfahren nach mindestens einem der Ansprüche 1 bis 3, wobei die Mikroorganismen vorkonditioniert worden sind.

5. Verfahren nach mindestens einem der Ansprüche 1 bis 4, wobei durch den Wechsel zwischen submersen und nicht submersen Bedingungen abwechselnd im wesentlichen anaerobe oder aerobe Bedingungen eingestellt werden.

6. Verfahren nach einem der Ansprüche 1 bis 5, dadurch gekennzeichnet, dass die Zeitintervalle, für die die Mikroorganismen submersen Bedingungen ausgesetzt sind, und die Zeitintervalle, für die die Mikroorganismen nicht submersen Bedingungen ausgesetzt sind, unterschiedlich lang sind.

7. Verfahren nach Anspruch 6, dadurch gekennzeichnet, dass die Zeitintervalle, für die die Mikroorganismen submersen Bedingungen ausgesetzt sind, und die Zeitintervalle, für die die Mikroorganismen nicht submersen Bedingungen ausgesetzt sind, jeweils untereinander gleich lang oder unterschiedlich lang oder in Abhängigkeit von ihrer Anzahl zeitlich variabel sind.

8. Vorrichtung zum mikrobiologischen Abbau von Schadstoffen in Fluiden mit
- mindestens zwei Aufnahmeräumen (1,2) für das Fluid, wobei sich in mindestens einem Aufnahmeraum (1,2) immobilisierte Mikroorganismen befinden,
**dadurch gekennzeichnet ,**
- dass die mindestens zwei Aufnahmeräume (1,2) durch eine Vebindungsleitung (3) untereinander in Fluidverbindung bringbar sind und dass Einrichtungen (4) vorgesehen sind, mittels derer das Fluid wechselweise von dem einen Aufnahmeraum (1) in den anderen Aufnahmeraum überführbar ist, wobei die Mikroorganismen in dem mindestens einen Aufnahmeraum (1,2) alternierend submersen und nicht submersen Bedingungen aussetzbar sind.

9. Vorrichtung nach Anspruch 8, dadurch gekennzeichnet, dass die Aufnahme räume (1,2) innerhalb eines Behälters (5) angeordnet und durch mindestens eine Trennwand (6) voneinander getrennt sind.

10. Vorrichtung nach Anspruch 8, dadurch gekennzeichnet, dass die Einrichtung (4) eine Druck- und/oder Saugpumpe zum Umpumpen des Fluids zwischen den Aufnahmeräumen (1,2) aufweist.

11. Vorrichtung nach Anspruch 10, dadurch gekennzeichnet, dass die Pumpe (4) den in einem der Aufnahmeräume (1,2) herrschenden hydrostatischen Druck zum Umpumpen des Fluids gegen die Schwerkraft in den über diesem Aufnahmeraum (1) angeordneten anderen Aufnahmeraum und aus diesem heraus zurück in den einen Aufnahmeraum (1) verändert.

12. Vorrichtung nach einem der Ansprüche 8 bis 11, dadurch gekennzeichnet, dass mehrere Gruppen von mindestens zwei Aufnahmeräumen (1,2) fluidmässig parallel und/oder seriell geschaltet sind und dass zwischen den Gruppen von mindestens zwei Aufnahmeräumen eine Einrichtung zum Überführen des Fluids aus mindestens einem der Aufnahmeräume der einen Gruppe in mindestens einen der Aufnahmeräume der benachbarten Gruppe vorgesehen sind.
